# EUROPÄISCHE PATENTSCHRIFT

(11) **EP 2 392 438 B1**
(45) Veröffentlichungstag und Bekanntmachung des Hinweises auf die Patenterteilung: **03.05.2017**
(21) Anmeldenummer: 10164737.8
(22) Anmeldetag: 02.06.2010
(51) Int. Cl.: B27D 5/00, B23C 3/12, B23Q 35/10

(54) **Bearbeitungsvorrichtung**
Processing device
Dispositif de traitement

(43) Veröffentlichungstag der Anmeldung: 07.12.2011
(73) Patentinhaber: HOMAG GmbH, 72296 Schopfloch (DE)
(72) Erfinder: Kalmbach, Wilhelm, 72296 Schopfloch (DE)
(74) Vertreter: Hoffmann Eitle

(56) Entgegenhaltungen:
- EP-A1- 0 587 102
- EP-A1- 2 181 816
- EP-A2- 0 395 996
- EP-A2- 1 302 287
- DE-C- 954 737
- DE-U- 1 899 578
- DE-U1- 8 526 397
- DE-U1- 29 820 087
- JP-A- 9 295 251
- US-A- 2 304 405
- US-A- 5 423 642

## Beschreibung

### Technisches Gebiet

Die vorliegende Erfindung bezieht sich auf eine Vorrichtung zum Bearbeiten von bevorzugt plattenförmigen Werkstücken, die zumindest abschnittsweise aus Holz, Holzwerkstoffen,

Kunststoff oder dergleichen bestehen, gemäß dem Oberbegriff des Anspruchs 1. Eine solche Vorrichtung ist aus der JP 9 295521 A bekannt.

Solche plattenförmigen Werkstücke werden beispielsweise in der Möbelindustrie weiterverarbeitet. Bedingt durch die Toleranzen der Materialstärke werden Bearbeitungen an den Werkstückschmalflächen, wie z.B. eine Profilbearbeitung oder die Nachbearbeitung von angeleimten Kanten mittels Kopierverfahren durchgeführt, um eine Führung des Werkzeugs entlang der tatsächlichen Werkstückgeometrie zu erreichen.

Auch aufspannungsbedingte Lagetoleranzen des Werkstücks können dadurch kompensiert werden.

Bei der Kopierbearbeitung ist eine Tasteinrichtung mit einem Tastelement, in der Regel einer Tastrolle vorgesehen, die auf der Werkstückoberfläche abrollt und die Lage des Werkzeugs relativ zum Werkstück steuert.

### Stand der Technik

Aus der EP 2 191 948 A ist eine Vorrichtung der eingangs genannten Art bekannt. Hier ist die Tastrolle neben und koaxial zum Fräser angebracht, was einen besonders einfachen kinematischen Aufbau ermöglicht. Es sind daher keine separaten Trägerarme für die Tastrollen notwendig, sondern die Tastrolle wird beispielsweise direkt auf einem Werkzeughalter der Werkzeuganordnung vorgesehen. Dadurch verringert sich das Gewicht der während der Schmalflächenbearbeitung zu bewegenden Teile und somit auch die notwendige Antriebsleistung.

Wenn sich bei dieser Anordnung der Werkzeugdurchmesser durch Abnutzung oder ein Nachschärfen verändert, muss auch die Tastrolle angepasst werden, um eine gleichbleibende Lagezuordnung von Werkstück und Werkzeug beizubehalten. Ferner ist unter Umständen auch eine Anpassung der Tastrolle dann erforderlich, wenn zwar die Bearbeitungsgeometrie von Werkzeug und Werkstück gleich bleibt, jedoch auf ein anderes Werkstoffmaterial mit einer anderen Festigkeit gewechselt wird, da sich die Tastrolle dann verändert in den Werkstoff eindrückt.

Bei dieser Anordnung kann die Tastrolle ausgetauscht und durch eine im Durchmesser angepasste Tastrolle ersetzt werden. Dies nimmt Zeit in Anspruch und erhöht daher die Stillstandszeit der Maschine.

Als Stand der Technik ist die JP 9 295251 A1 bekannt, die eine Vorrichtung zum Bearbeiten Werkstücken betrifft. Diese Vorrichtung umfasst ein Werkzeug sowie eine Tasteinrichtung mit wenigstens einer Tastrolle. Als weiterer Stand der Technik ist die DE 1 899 578 U1 bekannt, die eine Vorrichtung zum Bearbeiten, wie Fräsen, Sägen, Schleifen oder Dergleichen, von Werkstücken, insbesondere von kantenfurnierten Werkstücken, betrifft. Diese bekannte Vorrichtung umfasst eine Tastrolle, sowie einen durch diese geführten Fräskopf.

Als weiteres Dokument ist die EP 2 181 816 A1 bekannt, die ein Bearbeitungsaggregat mit einer Tastrolle zeigt. Die Tastrolle bestimmt den Abstand des Bearbeitungswerkzeugs zum Werkstück, wobei die Tastrolle relativ zum Bearbeitungswerkzeug bewegbar befestigt ist, und eine Antriebsvorrichtung vorgesehen ist, die das Bearbeitungswerkzeug antreibt. Die Befestigungseinheit ist am Aggregat angebracht und bewegt die Tastrolle relativ zum Bearbeitungswerkzeug translatorisch wohl insbesondere parallel zur Ebene der Werkstückauflage. Die Befestigungseinheit wird durch eine Antriebseinheit bewegt.

Als weiteres Dokument ist die DE 298 20 087 U1 bekannt.

### Darstellung der Erfindung

Es ist daher Aufgabe der vorliegenden Erfindung, eine Vorrichtung zum Bearbeiten von bevorzugt plattenförmigen Werkstücken der eingangs genannten Art bereitzustellen, die es beim Einsatz von wenigstens einer Tastrolle zur gleichbleibende Lagezuordnung von Werkstück und Werkzeug ermöglicht, einen Werkzeugverschleiß auszugleichen und die Maschinenstillstandszeiten möglichst gering zu halten.

Erfindungsgemäß wird diese Aufgabe durch eine Vorrichtung zum Bearbeiten von bevorzugt plattenförmigen Werkstücken mit den Merkmalen des Patentanspruchs 1 sowie ein Verfahren nach Anspruch 7 gelöst. Besonders bevorzugte Ausführungsformen der Erfindung sind in den abhängigen Ansprüchen angegeben.

Demgemäß weist eine Vorrichtung zum Bearbeiten von bevorzugt plattenförmigen Werkstücken, die bevorzugt zumindest abschnittsweise aus Holz, Holzwerkstoffen, Kunststoff oder dergleichen bestehen, eine auf das Werkstück einwirkende Werkzeuganordnung, die zumindest ein Werkzeug aufweist, auf.Erfindungsgemäß ist das Werkzeug ein rotierendes Werkzeug, beispielsweise ein Fräswerkzeug. Die Vorrichtung weist eine Welle auf, an der das Werkzeug fest angebracht ist und mit der es gedreht wird. Das Werkstück kann beispielsweise eine Spanplatte mit angeleimter Kante sein, die für einen exakten Kantenabschluss oder für eine Formgebung der angeleimten Kante spanend nachbearbeitet werden soll. Hierfür werden häufig Fräser eingesetzt. Profilfräser erlauben eine weitergehende Formgebung der angeleimten Kante.

Die erfindungsgemäße Vorrichtung weist ferner eine Tasteinrichtung mit wenigstens einer Tastrolle auf, die um ihre Rotationsachse drehbar gelagert ist und die die Lage des Werkzeugs relativ zum Werkstück steuert.

Bevorzugt weist die Tastrolle einen größeren Durchmesser auf als der Bearbeitungsbereich eines zugeordneten Werkzeugs. Dabei ist die Tastrolle mittels einer Stellanordnung derart gelagert, dass ihre Drehachse relativ zu dem zugeordneten Werkzeug verstellbar ist. Durch die Verstellbarkeit der Tastrolle lässt sich der Abstand des Werkzeugs zum Werkstück vergrößern und verkleinern. Im Falle von einem Werkzeugverschleiß z.B. bei einem Fräser und dem sich damit verringernden Durchmesser des Kreises, den seine Schneiden beschreiben, wenn der Fräser rotiert, kann eine Anpassung derart erfolgen, dass die Drehachse der Tastrolle entsprechend verstellt wird. Der Fräser wird dadurch näher an die Werkstückoberfläche herangebracht, wodurch der Werkzeugverschleiß ausgeglichen werden kann. Ein Austausch der Tastrolle ist dadurch - in gewissen Grenzen - nicht mehr erforderlich. Die durch das Auswechseln der Tastrolle bedingten Maschinenstillstandszeiten können so reduziert werden. Ferner wird auch das Einfahren vereinfacht. Die Tastrolle wird dazu auf eine mittlere Achsposition eingestellt. Anschließend kann je nach Arbeitsergebnis eine Feinjustierung mittels der Achseinstellung der Tastrolle durchgeführt werden, ohne dass umfangreichere Umrüstarbeiten, z.B. der Wechsel auf eine andere Tastrolle erforderlich sind. Ferner kann die Tastung der Tastrolle mittels der Stellanordnung auch an wechselnde Tastrichtungen angepasst werden, wie sie beispielsweise bei einer Rundumbearbeitung auftreten. Dabei ist zu beachten, dass das Verstellen der Drehachse der Tastrolle vorteilhaft auch während eines Bearbeitungsbetriebes der erfindungsgemäßen Bearbeitungsvorrichtung erfolgen kann.

Gemäß einer Weiterbildung der Erfindung ist vorgesehen, dass die Tastrolle einen größeren Durchmesser aufweist als der sogenannte Basisdurchmesser, d.h. der Bearbeitungsbereich eines zugeordneten Werkzeugs. Hierdurch wird ermöglicht, dass sich bereits mit vergleichsweise kleinen Stellbewegungen die gewünschte Anpassung der Tastrollenlage erzielen lässt. Dies gilt insbesondere, wenn im Zuge der Bearbeitung eines Werkstücks unterschiedliche Tastrichtungen zum Einsatz kommen, wie beispielsweise bei einer Rundumbearbeitung einer vollständigen Werkstückschmalfläche.

Gemäß der Erfindung ist es vorgesehen, dass die Stellanordnung einen Exzenter aufweist, mittels dessen die Tastrolle gelagert ist. Der Einsatz eines Exzenters ermöglicht eine sehr kompakte und einfache Konstruktion der erfindungsgemäßen Vorrichtung und eine gute Einstellbarkeit. Dabei ist es besonders bevorzugt, dass der Exzenter um eine Achse drehbar ist, die parallel und beabstandet zu der Rotationsachse der Tastrolle ist. Hierdurch ergibt sich mit minimalem Aufwand, hoher Robustheit und hoher Präzision die gewünschte Verstellbarkeit der Tastrolle. Besonders einfach und robust wird die Konstruktion ferner, wenn der Exzenter gemäß einer Weiterbildung der Erfindung eine kreisförmige Führungsfläche für die Tastrolle aufweist.

Erfindungsgemäß ist es vorgesehen, dass die Stellanordnung einen Stellantrieb aufweist, mittels dessen die Rotationsachse der Tastrolle relativ zu dem zugeordneten Werkzeug verstellbar ist. Hierdurch wird ermöglicht, dass die Stellanordnung beispielsweise auch während eines Bearbeitungsbetriebes der erfindungsgemäßen Vorrichtung betätigt werden kann, sodass die Positionierung der Tastrolle auch im Zuge eines Bearbeitungsvorgangs optimal an die jeweiligen Randbedingungen wie beispielsweise auch die Nachgiebigkeit des bearbeiteten Werkstücks, die Tastrichtung, etc. angepasst werden kann.

Obgleich der Stellantrieb im Rahmen der Erfindung als separate Einheit vorgesehen sein kann, ist es gemäß einer Weiterbildung der Erfindung vorgesehen, dass der Stellantrieb in die Werkzeuganordnung integriert ist. Hierdurch ergibt sich nicht nur eine besonders kompakte Konstruktion, sondern der Stellantrieb lässt sich auch besonders direkt und ohne Umwege oder aufwändige Konstruktionen an die übrigen Bauteile der Stellanordnung wie insbesondere den Exzenter oder dergleichen anbinden. Diese Konstruktion ist besonders kompakt, robust und vor äußeren Einflüssen geschützt.

Gemäß einer Weiterbildung ist darüber hinaus vorgesehen, dass mindestens ein Werkzeug als Stufenwerkzeug mit mehreren Basisdurchmessern (Bearbeitungsbereichen) ausgestaltet ist, wobei die zugeordnete Tastrolle einen größeren Durchmesser aufweist als der Bearbeitungsbereich mit dem größten Durchmesser. Bei diesem Konzept lässt sich eine einzige, verstellbare Tastrolle für mehrere Bearbeitungsbereiche eines Werkzeugs einsetzen, was die Konstruktion verglichen zu einem herkömmlichen Stufenwerkzeug mit mehreren Tastrollen drastisch vereinfacht bzw. die Notwendigkeit von Werkzeugwechseln und entsprechenden Tastrollenwechseln drastisch vermindert. Alternativ ist es im Rahmen der Erfindung jedoch ebenfalls möglich, für jeden Bearbeitungsbereich (Basisdurchmesser) eine eigene, bevorzugt verstellbare Tastrolle vorzusehen.

### Kurze Beschreibung der Zeichnungen

Fig. 1 zeigt schematisch eine teilweise Frontansicht und eine Schnittansicht einer Bearbeitungsvorrichtung als bevorzugte Ausführungsform der vorliegenden Erfindung;
Fig. 2 zeigt schematisch eine Schnittansicht einer Bearbeitungsvorrichtung als zweite Ausführungsform, die nicht Teil der vorliegenden Erfindung ist.
Fig. 3 veranschaulicht einen beispielhaften Betrieb einer Bearbeitungsvorrichtung, die nicht Teil der Erfindung ist.

### Ausführliche Beschreibung bevorzugter Ausführungsformen

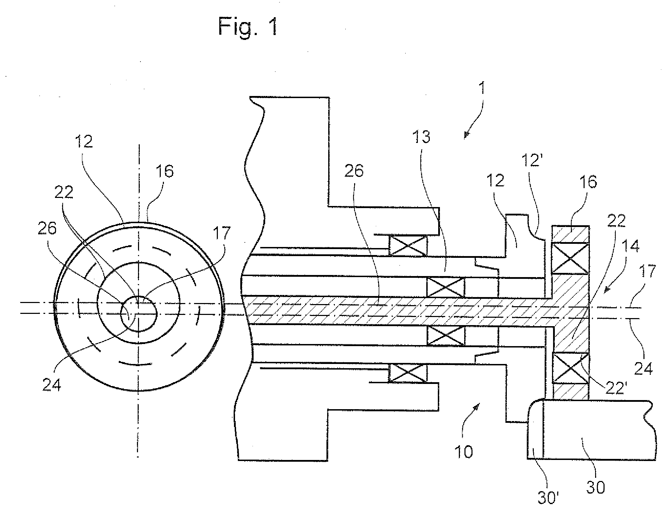

Bevorzugte Ausführungsformen werden nachfolgen ausführlich unter Bezugnahme auf die begleitenden Zeichnungen beschrieben. Figur 1 zeigt eine bevorzugte Ausführungsform der vorliegenden Erfindung.

Eine Bearbeitungsvorrichtung 1 gemäß einer ersten bevorzugten Ausführungsform der Erfindung ist schematisch in Fig. 1 in einer teilweisen Frontansicht sowie Schnittansicht dargestellt. Die Bearbeitungsvorrichtung 1 dient zum Bearbeiten von bevorzugt plattenförmigen Werkstücken 30, die beispielsweise aus Holz, Holzwerkstoffen, Kunststoff oder ähnlichen Materialien bestehen, wie sie beispielsweise im Bereich der Möbel- und Bauelementeindustrie verbreitet zum Einsatz kommen.

Bei der in Fig. 1 gezeigten Bearbeitungsvorrichtung 1 handelt es sich konkret um ein Bündigfräsaggregat mit einem Fräswerkzeug 12, das dazu dient, eine an einem Werkstück 30 vorgesehene Kante 30' nachzubearbeiten. Im Zuge der Nachbearbeitung kann die Kante 30' zu einer angrenzenden Oberfläche des Werkstücks 30 bündig gefräst und dabei zusätzlich auch mit einer Fase oder einem Radius versehen werden. Es ist jedoch zu beachten, dass im Rahmen der Erfindung auch andere Bearbeitungsaggregate bzw. Werkzeuge zum Einsatz kommen können.

Ferner umfasst die Bearbeitungsvorrichtung 1 eine Tastrolle 16, die um eine Rotationsachse 17 drehbar gelagert ist und dazu dient, die Lage des Werkzeugs 12 relativ zum Werkstück 30 zu steuern. In der vorliegenden Ausführungsform bedeutet dies, dass die Tastrolle 16 auf einer Oberfläche des Werkstücks 30 abrollt und somit festlegt, um welches Maß das Fräswerkzeug 12 die Kante 30' abträgt. Dabei weist die Tastrolle 16 einen größeren Durchmesser auf als der Bearbeitungsbereich (sogenannte "Basisdurchmesser", d. h. Minimaldurchmesser des Bearbeitungsbereichs bzw. dessen Durchmesser im Bereich der Werkstückfläche, auf welcher die Tastrolle abrollt) 12' des zugeordneten Werkzeugs 12.

Die Tastrolle 16 ist erfindungsgemäß mittels einer Stellanordnung 20 derart gelagert, dass die Rotationsachse 17 relativ zu dem zugeordneten Werkzeug 12 verstellbar ist. Dies geschieht in der vorliegenden Ausführungsform mittels eines Exzenters 22, auf dessen äußerer Umfangsfläche 22' die Tastrolle 16 über schematisch gezeigte Lager gelagert ist. Der Exzenter 22 selbst ist um eine Achse 24 drehbar, die parallel und beabstandet zu der Rotationsachse 17 ist. Dabei ist der Exzenter 22 über eine Welle 26 mit einem nicht näher gezeigten Stellantrieb verbunden, der eingerichtet ist, den Exzenter drehend anzutreiben. Wie in Fig. 1 zu erkennen ist, verläuft die Welle 26 dabei innerhalb der Werkzeuganordnung 10, und zwar in der vorliegenden Ausführungsform sogar innerhalb einer Antriebswelle 13 des Bearbeitungswerkzeugs 12.

Der Betrieb der erfindungsgemäßen Vorrichtung 1 gemäß der vorliegenden Ausführungsform vollzieht sich beispielsweise wie folgt. Die Sollabmessungen des zu bearbeitenden Werkstücks 30 bzw. der nachzubearbeitenden Kante 30' sind in einer Maschinensteuerung hinterlegt, welche die allgemeine Bewegung der Bearbeitungsvorrichtung 1 in Bezug auf das Werkstück 30 koordiniert. Die Feinabstimmung der Bearbeitungsvorrichtung 1 in Bezug auf das Werkstück 30 erfolgt mittels der Tastrolle 16, die auf einer Oberfläche des Werkstücks 30 abrollt. Dabei wird die Positionierung der Tastrolle 16 in Bezug auf das Werkzeug 12 durch Verdrehen des Exzenters 22 auf einen gewünschten Wert eingestellt. Durch diese Anpassung kann der Relativpositionierung zwischen Tastrolle 16 und Werkzeug 12 können beispielsweise Abnutzungserscheinungen des Bearbeitungswerkzeugs ausgeglichen werden. Ebenso ist es möglich, je nach Nachgiebigkeit der Werkstückoberfläche die Relativpositionierung zwischen Tastrolle 16 und Bearbeitungswerkzeug 12 derart anzupassen, dass stets das gewünschte Bearbeitungsergebnis der Kante 30' erzielt wird. Nicht zuletzt ermöglicht ein Verstellen der Relativpositionierung mittels des Exzenters 22 auch, dass die Relativpositionierung zwischen Tastrolle 16 und Bearbeitungswerkzeug 12 für jede beliebige Tastrichtung (beispielsweise vertikal von oben, horizontal von links, vertikal von unten und horizontal von rechts) optimal und an die jeweiligen Bedingungen angepasst ist. Hierdurch wird eine perfekte und zügige Rundumbearbeitung ermöglicht, bei welcher die Rotationsachse 17 der Tastrolle 16 auch während des Bearbeitungsbetriebes mit Druck auf das Bearbeitungswerkzeug 12 verstellt werden kann.

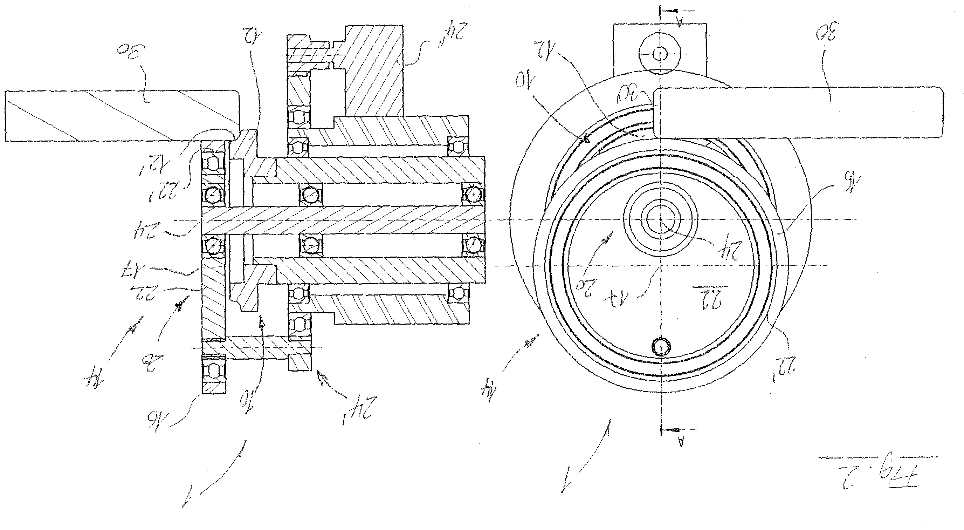

Eine zweite Ausführungsform der Bearbeitungsvorrichtung 1, die nicht Teil der Erfindung ist, ist in Fig. 2 schematisch in einer Frontansicht und einer Schnittansicht dargestellt. Die in Fig. 2 gezeigte Ausführungsform unterscheidet sich von der zuvor unter Bezugnahme auf Fig. 1 beschriebenen, erfindungsgemäßen ersten Ausführungsform primär dadurch, dass der Stellantrieb 24' für die Stellanordnung 20 bzw. den Exzenter 22' außerhalb der Werkzeuganordnung 10 vorgesehen ist. Insbesondere umfasst die Bearbeitungsvorrichtung 1 in der vorliegenden Ausführungsform einen Antriebsmotor 24", der über einen außen liegenden Getriebezug mit dem Exzenter 22 gekoppelt ist, um diesen bei Bedarf in Drehrichtung zu verstellen. Ferner ist der Abstand zwischen Drehachse 17 der Tastrolle 16 und der Drehachse 24 des Exzenters 23 in der vorliegenden Ausführungsform etwas größer ausgeführt, sodass sich ein vergrößerter Einstellbereich der Relativpositionierung zwischen Tastrolle 16 und Bearbeitungswerkzeug 12 ergibt.

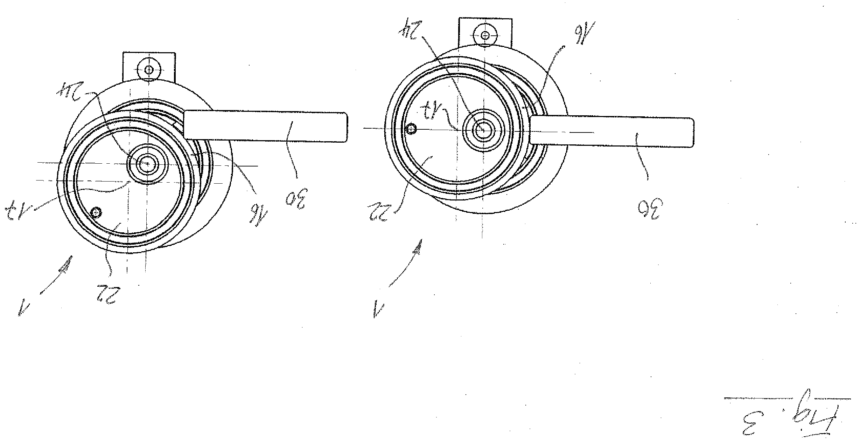

Ein beispielhafter Betrieb der Bearbeitungsvorrichtung 1 ist in Fig. 3 veranschaulicht. Diese zeigt zwei verschiedene Bearbeitungsstellungen der Bearbeitungsvorrichtung 1 in Bezug auf das zu bearbeitende Werkstück 30 bzw. die nicht separat gezeigte Kante 30' des Werkstücks 30. Wie anhand der beiden Bearbeitungsstellungen zu erkennen ist, lässt sich mittels der Bearbeitungsvorrichtung 1 eine Rundumbearbeitung des Werkstücks 30 ausführen, wobei im Zuge der Rundumbearbeitung mittels eines Verdrehens des Exzenters 22 eine optimale Einstellung der Tastrolle 16 in Bezug auf das Bearbeitungswerkzeug 12 stattfindet, um stets ein sauberes, bündiges Bearbeitungsergebnis der Kante des Werkstücks 30 zu erzielen.

## Patentansprüche

1. Vorrichtung (1) zum Bearbeiten von bevorzugt plattenförmigen Werkstücken (30), die bevorzugt zumindest abschnittsweise aus Holz, Holzwerkstoffen, Kunststoff oder dergleichen bestehen, mit
einer auf das Werkstück (30) einwirkenden Werkzeuganordnung (10), die zumindest ein Werkzeug (12) aufweist, und
einer Tasteinrichtung (14) mit wenigstens einer Tastrolle (16), die um ihre Rotationsachse (17) drehbar gelagert ist und die die Lage des Werkzeugs (12) relativ zum Werkstück (30) steuert, wobei
die Tastrolle (16) mittels einer Stellanordnung (20) derart gelagert ist, dass ihre Rotationsachse (17) relativ zu dem zugeordneten Werkzeug (12) verstellbar ist,
wobei die Stellanordnung (20) einen Exzenter (22) aufweist, mittels dessen die Tastrolle (16) gelagert ist,
die Stellanordnung (20) ferner einen Stellantrieb aufweist, mittels dessen die Rotationsachse (17) der Tastrolle (16) relativ zu dem zugeordneten Werkzeug (12) verstellbar ist,
und der Stellantrieb eingerichtet ist, den Exzenter (22) drehend anzutreiben, **dadurch gekennzeichnet, dass**
der Stellantrieb mit dem Exzenter (22) über eine Welle (26) verbunden ist, die zumindest abschnittsweise innerhalb einer Antriebswelle (13) des zugeordneten Bearbeitungswerkzeugs (12) verläuft.

2. Vorrichtung nach Anspruch 1, **dadurch gekennzeichnet, dass** die Tastrolle (16) einen größeren Durchmesser aufweist als der Bearbeitungsbereich (12') eines zugeordneten Werkzeugs (12).

3. Vorrichtung nach Anspruch 1 oder 2, **dadurch gekennzeichnet, dass** der Exzenter (22) um eine Achse (24) drehbar ist, die parallel und beabstandet zu der Rotationsachse (17) der Tastrolle (16) ist.

4. Vorrichtung nach einem der vorhergehenden Ansprüche, **dadurch gekennzeichnet, dass** der Exzenter (22) eine kreisförmige Führungsfläche (22') für die Tastrolle (16) aufweist.

5. Vorrichtung nach einem der vorhergehenden Ansprüche, **dadurch gekennzeichnet, dass** der Stellantrieb in die Werkzeuganordnung integriert ist.

6. Vorrichtung nach einem der vorhergehenden Ansprüche, **dadurch gekennzeichnet, dass** mindestens ein Werkzeug als Stufenwerkzeug mit mehreren Bearbeitungsbereichen ausgestaltet ist, wobei die zugeordnete Tastrolle einen größeren Durchmesser aufweist als der Bearbeitungsbereich mit dem größten Durchmesser.

7. Verfahren zum Bearbeiten von bevorzugt plattenförmigen Werkstücken (30), die bevorzugt zumindest abschnittsweise aus Holz, Holzwerkstoffen, Kunststoff oder dergleichen bestehen, unter Einsatz einer Vorrichtung (1) nach einem der vorhergehenden Ansprüche, mit den Schritten:
Bearbeiten eines Werkstücks (30) mittels eines Werkzeugs (12), während die zugeordnete Tastrolle (16) auf einer Oberfläche des Werkstücks (30) abrollt, und
Verstellen der Rotationsachse (17) der Tastrolle (16) relativ zu dem zugeordneten Werkzeug (12) während des Bearbeitungsbetriebes des Werkzeugs.

## Claims

1. Apparatus (1) for processing preferably board-like workpieces (30) which preferably consist, in at least one section, of wood, derived timber products, plastic or the like, having
a tool assembly (10) which acts on the workpiece (30) and which has at least one tool (12), and
a sensing device (14) having at least one sensing roller (16) which is mounted so as to be rotatable about its axis of rotation (17) and which controls the position of the tool (12) relative to the workpiece (30), wherein
the sensing roller (16) is mounted by means of an actuating assembly (20) in such a way that its axis of rotation (17) is adjustable relative to the associated tool (12),
wherein the actuating assembly (20) has a cam (22) by means of which the sensing roller (16) is mounted,
the actuating assembly (20) further has an actuating drive by means of which the axis of rotation (17) of the sensing roller (16) is adjustable relative to the associated tool (12),
and the actuating drive is designed to drive the cam (22) in rotation, **characterised in that**
the actuating drive is connected to the cam (22) by a shaft (26) which in at least one section extends within a drive shaft (13) of the associated processing tool (12).

2. Apparatus according to claim 1, **characterised in that** the sensing roller (16) has a larger diameter than the processing region (12') of an associated tool (12).

3. Apparatus according to claim 1 or 2, **characterised in that** the cam (22) is rotatable about an axis (24) which is parallel to and at a distance from the axis of rotation (17) of the sensing roller (16).

4. Apparatus according to any of the preceding claims, **characterised in that** the cam (22) has a circular guide surface (22') for the sensing roller (16).

5. Apparatus according to any of the preceding claims, **characterised in that** the actuating drive is integrated in the tool assembly.

6. Apparatus according to any of the preceding claims, **characterised in that** at least one tool is designed as a multi-stage tool having a plurality of processing regions, wherein the associated sensing roller has a larger diameter than the processing region with the largest diameter.

7. Method for processing preferably board-like workpieces (30) which preferably consist, in at least one section, of wood, derived timber products, plastic or the like, using an apparatus (1) according to any of the preceding claims, with the steps of:
processing a workpiece (30) by means of a tool (12) while the associated sensing roller (16) rolls over a surface of the workpiece (30), and
adjusting the axis of rotation (17) of the sensing roller (16) relative to the associated tool (12) during the processing operation of the tool.

## Revendications

1. Dispositif (1) servant à usiner des pièces (30) présentant de manière préférée une forme de panneau, qui sont constituées de manière préférée au moins par endroits de bois, de matériaux dérivés du bois, de matière plastique ou similaires, avec
un ensemble d'outils (10) agissant sur la pièce (30), lequel présente au moins un outil (12), et
un dispositif palpeur (14) avec au moins un galet palpeur (16), qui est monté de manière à pouvoir tourner autour de son axe de rotation (17) et qui commande la position de l'outil (12) par rapport à la pièce (30), dans lequel
le galet palpeur (16) est monté au moyen d'un ensemble de réglage (20) de telle manière que son axe de rotation (17) peut être ajusté par rapport à l'outil (12) associé,
dans lequel l'ensemble de réglage (20) présente un excentrique (22), au moyen duquel le galet palpeur (16) est monté,
l'ensemble de réglage (20) présente en outre un entraînement de réglage, au moyen duquel l'axe de rotation (17) du galet palpeur (16) peut être ajusté par rapport à l'outil (12) associé,
et l'entraînement de réglage est mis au point afin d'entraîner l'excentrique (22) en rotation, **caractérisé en ce que**
l'entraînement de réglage est relié à l'excentrique (22) par l'intermédiaire d'un arbre (26), qui s'étend au moins par endroits à l'intérieur d'un arbre d'entraînement (13) de l'outil d'usinage (12) associé.

2. Dispositif selon la revendication 1, **caractérisé en ce que**
le galet palpeur (16) présente un diamètre plus grand que la zone d'usinage (12') d'un outil (12) associé.

3. Dispositif selon la revendication 1 ou 2, **caractérisé en ce que** l'excentrique (22) peut tourner autour d'un axe (24), qui est parallèle et tenu à distance par rapport à l'axe de rotation (17) du galet palpeur (16).

4. Dispositif selon l'une quelconque des revendications précédentes, **caractérisé en ce que** l'excentrique (22) présente une surface de guidage (22') de forme circulaire pour le galet palpeur (16).

5. Dispositif selon l'une quelconque des revendications précédentes, **caractérisé en ce que** l'entraînement de guidage est intégré dans l'ensemble d'outils.

6. Dispositif selon l'une quelconque des revendications précédentes, **caractérisé en ce qu'**au moins un outil est configuré sous la forme d'un outil à paliers avec plusieurs zones d'usinage, dans lequel le galet palpeur associé présente un diamètre plus grand que la zone d'usinage avec le plus grand diamètre.

7. Procédé servant à usiner des pièces (30) présentant de manière préférée une forme de panneau, qui sont constituées de manière préférée au moins par endroits de bois, de matériaux dérivés du bois, de matière plastique ou similaires, en employant un dispositif (1) selon l'une quelconque des revendications précédentes, avec les étapes suivantes consistant à :
usiner une pièce (30) au moyen d'un outil (12) alors que le galet palpeur (16) associé roule sur une surface de la pièce (30), et
ajuster l'axe de rotation (17) du galet palpeur (16) par rapport à l'outil (12) associé au cours du mode de fonctionnement d'usinage de l'outil.
